(19)

Europäisches
Patentamt
European
Patent Office
Office européen
des brevets

(11) **EP 2 560 378 A2**

(12) **EUROPEAN PATENT APPLICATION**

(43) Date of publication:
**20.02.2013 Bulletin 2013/08**

(51) Int Cl.:
***H04N 5/74*** *(2006.01)*  ***H04N 9/31*** *(2006.01)*

(21) Application number: **12180412.4**

(22) Date of filing: **14.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.08.2011  KR 20110081187**

(71) Applicant: **Samsung Electronics Co., Ltd.
Suwon-si, Gyeonggi-do, 443-742 (KR)**

(72) Inventors:
• **Park, Seong-Ha
443-742 Gyeonggi-do (KR)**
• **Kim, Yong-Kwan
443-742 Gyeonggi-do (KR)**
• **Lee, Dong-Hi
443-742 Gyeonggi-do (KR)**

(74) Representative: **Grünecker, Kinkeldey,
Stockmair & Schwanhäusser
Leopoldstrasse 4
80802 München (DE)**

(54) **Projector with offset between projection optical system and display unit**

(57)    A projector for projecting out lights forming an image on an external screen includes at least one light source configured to output a light; a display unit having a plurality of pixel elements and configured to form an image by controlling the pixel elements according to a driving signal; an illumination optical system having at least one lens and mirror arranged on a first optical axis, and configured to output the light output from the light source to the display unit through the mirror; and a projection optical system having at least one lens arranged on a second optical axis intersecting the first optical axis, and configured to externally output the light output from the display unit. A preset offset is provided between the second optical axis of the projection optical system and the central axis of the display unit.

FIG.1

EP 2 560 378 A2

**Description**

Field of the Invention

The present invention relates generally to a projector, and more particularly to a micro-projector including a light source, such as a Light Emitting Diode (LED) and a lamp, an illumination optical system, and a projection optical system.

Background to the Invention

Recently, micro-projector related technologies have been rapidly developing, for projecting and displaying data or a moving/still picture stored in a display unit, such as a portable phone, a computer, an MP3 player, or a compact digital camera, to the outside of the display unit as an image. A conventional micro-projector includes a micro flat panel display unit, such as a Digital Micro-mirror Device (DMD) or a Liquid Crystal Display (LCD), that has a relatively small volume and weight.
In addition, the conventional projector includes an illumination optical system and a projection optical system. The illumination optical system refers to an optical system arranged to an optical path from a light source to the display unit, and the projection optical system refers to an optical system arranged to an optical path from the display unit to an external screen.
There is a demand for a reduced size for such a projector in order to incorporate the projector within a compact display unit. However, if the projector is manufactured so small to be housed within a compact display unit, a problem arises in that the optical devices of the illumination optical system and the projection optical system interfere with each other. For example, since an optical device of the optical system is positioned on the optical path of the projection system, the optical device may block a part of the light to be provided to the projection optical system.

Summary of the Invention

Accordingly, the present invention has been made to solve the above-stated problems and disadvantages occurring in the prior art, and to provide at least the advantages described below.
Accordingly, an aspect of the present invention provides a micro-projector which enables efficient miniaturization of the micro-projector by compensating for light loss, which is caused as projected light is partially blocked by an optical device of an illumination optical system, as much as possible, and which is capable of suppressing a ghost or stray light phenomenon which occurs on a screen or at the periphery thereof as the screen is reduced in size.
According to an aspect of the present invention, there is provided a projector for projecting out light that forms an image on an external screen, including at least one light source configured to output a light, a display unit comprising a plurality of pixel elements and configured to form an image by controlling the pixel elements according to a driving signal, an illumination optical system comprising at least one lens and mirror arranged on a first optical axis, and configured to output the light output from the light source to the display unit through the mirror, and a projection optical system comprising at least one lens arranged on a second optical axis intersecting the first optical axis, and configured to output the light output from the display unit to the outside, wherein a preset offset is provided between the second optical axis of the projection optical system and the central axis of the display unit.

Brief Description of the Drawings

The above and other aspects, features and advantages of the present invention will be more apparent from the following detailed description taken in conjunction with the accompanying drawings, in which:

FIG. 1 is a diagram illustrating a basic construction of a micro-projector, according to an embodiment of the present invention;
FIG. 2 is a diagram illustrating a detailed construction of a projection optical system, according to an embodiment of the present invention;
FIG. 3 is a block diagram illustrating the basic construction illustrated in FIG 1, according to an embodiment of the present invention;
FIGs. 4 and 5 are diagrams illustrating a light blocking problem by a mirror according to an embodiment of the present invention; and
FIG. 6 is a block diagram illustrating a construction of a micro-projector according to an embodiment of the present invention.

Description of Embodiments of the Invention

Hereinafter, various embodiments of the present invention are described with reference to the accompanying drawings. In the following description, detailed description of known functions and configurations is omitted to avoid obscuring the subject matter of the present invention.

Further, in the following description, the ordinal numbers, such as first, second, etc., used to describe the embodiments of the present invention are merely to differentiate objects of the same name. The order of the objects may be optionally determined, and the description of a preceding object may be applied correspondingly to an accompanying object.

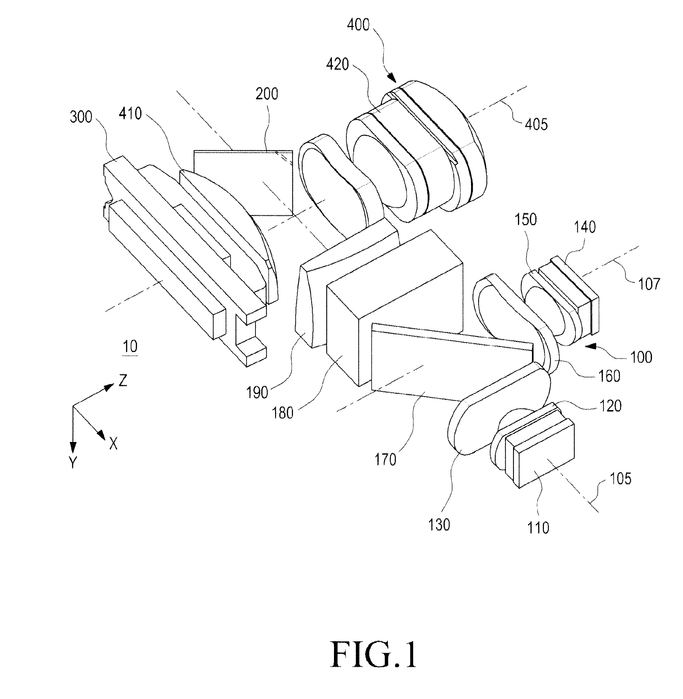

FIG. 1 is a diagram illustrating a basic construction of a micro-projector according to an embodiment of the present invention. The projector 10 includes first and second light sources 110 and 140, an illumination optical system 100 configured to illuminate a display unit 300 with the light output from the first and second light sources 110 and 140, a mirror 200, the display unit 300 configured to reflect the light by the pixel to form an image, and a projection optical system 400 configured to project the light reflected from the display unit 300 to an external screen. A first optical axis 105 is parallel to the X-axis, and each of an auxiliary optical axis 107 and a second optical axis 405 is parallel to the Z-axis. However, it should be noted that the first and second optical axes 105 and 405 are not necessarily required to always be positioned at right angles relative to each other, and the auxiliary optical axis 107 is also not required to be parallel to the Z-axis, as these are merely examples.

The illumination optical system 100 has the first optical axis 105 and the auxiliary optical axis 107, and includes the first and second light sources 110 and 140, first to fourth collimating lenses 120, 130, 150 and 160, a filter 170, an equalization lens 180, and a collecting or condensing lens 190. The second light source 140 and the third and fourth collimating lenses 150 and 160 are arranged on the auxiliary optical axis 107, and the remaining optical devices of the illumination optical system 100 are arranged on the first optical axis 105. Although in this description the output lights of a plurality of light sources are mixed to produce a white light, it is also possible to use a single light source configured to output various colors of lights (for example, a tunable wavelength light source), to use three light sources according to the three primary colors, or to use a white light source together with a color filter. An optical axis refers to an axis that does not cause any optical variation even if a corresponding optical system is rotated about the axis. Being arranged on an optical axis means that the center of curvature of an optical device of a corresponding optical system is positioned on the optical axis or the symmetrical point (i.e., symmetrical center) or the central point of the optical device is positioned on the optical axis.

The first light source 110 outputs a first primary color that travels along the first optical axis 105. An LED outputting a green light may be used as the first light source. The first light source 110 outputs the first primary color light that diverges at a predetermined angle around the first optical axis 105. Alternatively, a collimating lens may be incorporated with the first light source 110, in which case the first collimating lens may be omitted.

The first and second collimating lenses 120 and 130 receive the first primary color light that is output from the first light source 110 and diverges, and collimate (i.e., parallelize) and output the first primary color light. The term "collimating" means to reduce the diverging angle of a light, and ideally to make the light travel without converging or diverging. The first primary color light output from the first light source 110 may diverge to one direction, in which case a lens, of which at least one side is asymmetrical, may be used. Although the first and second collimating lenses 120 and 130 that form a pair are used in the present embodiment in order to gradually collimate of the first primary color light output from the first light source 110 (that is, the first and second collimating lenses 120 and 130 gradually parallelize the first primary color light) or in order to divisionally collimate the first primary color light in two directions that are perpendicular to each other (that is, the first collimating lens 110 collimates the first primary color light in the first direction (e.g., the Y-axis direction) and the second collimating lens 130 collimates the first primary light in the second direction (e.g., Z-axis direction) perpendicular to the first direction), it is possible to use a single collimating lens.

The second light source 140 outputs second and third primary color lights that travel along the auxiliary optical axis 107. For example, one LED or two LEDs for outputting red light and blue light may be used as the second light source 140.

The third and fourth collimating lenses 150 and 160 receive second and third primary color lights which are output from the second light source 140 and diverge, and collimate and output the second and third primary color lights.

Alternatively, the second and third primary color light sources may also separately exist, in which case the collimating lenses may exist in front of the respective primary color light sources. For example, an additional filter, which is transmissive for the third primary color light source positioned on the auxiliary optical axis 107 and reflective for the second primary color light source positioned substantially parallel to the first optical axis which is substantially perpendicular to the auxiliary optical axis 107, may be positioned in front of the filter 170 positioned on the first optical axis (that is, positioned between the third primary color light source and the filter 170 on the auxiliary optical axis 107).

The filter 170 reflects the second and third primary lights input from the fourth collimating lens 160 to travel along the first optical axis 105, and transmits the first primary color light input from the second collimating lens 130 as it is. The filter 170 may be arranged to form an angle of 45 degrees with the first optical axis 105, and may reflect the second and third primary color lights at an angle of 90 degrees. However, it shall be noted that the filter 170 is not required to be necessarily always arranged at the angle of 45 degrees with the first optical axis 105, and this is merely one example. Preferably, as the filter 170, a wavelength selective filter (or dichroic filter) or a prism may be used, or a wavelength independent filter, such as a beam splitter or a half mirror, may be used. For example, such a wavelength selective filter may be realized by depositing a plurality of films on a glass substrate. The first to third primary color lights are made to travel along the same optical axis, i.e. the first optical axis 105 by the filter 170.

The equalization lens 180 intensity-equalizes and outputs the light input from the filter 170. That is, the equalization lens 180 equalizes the intensity distribution of the light on the Y-Z plane. As the equalization lens 180, a conventional fly eye lens may be used. The aspect ratio of the light is matched to that of the display unit 300 and the color uniformity can be improved by the equalization lens 180.

The collecting lens 190 and relay lens 410 make the light input from the equalization lens 180 be focused on a surface of the display unit 300.

The mirror 200 receives the focused light from the collecting lens 190, and reflects the light to the display unit 300 side. The mirror 200 may be configured by depositing a high-reflective dielectric layer or metal layer on a substrate. As indicated by a dotted line in FIG. 1, at least one corner of the mirror 200 may be chamfered to have a non-right angle.

The relay lens 410 matches the light reflected from the mirror 200 to the display unit 300 in consideration of overfill. That is, the relay lens 410 makes the reflected light be incident to an area larger than the area occupied by the pixel elements 320 of the display unit 300. An Anti-Reflecting (AR) coating may be applied to the optical surface of each of the lenses of the projector 10 to minimize the reflexibility of incident light. Such an AR coating is configured to minimize the reflection of light incident to the surface of the coating, and may be formed by layers of optional materials provided that layers of a high refractive index (for example, Nb205 layers) and layers of a low refractive index (for example, $SiO_2$ layers) are alternately laminated. In particular, since a light reflected from the screen side optical surface of the relay lens 410 may cause a high noise on an image, it is desirable to apply the AR coating on the screen side optical surface.

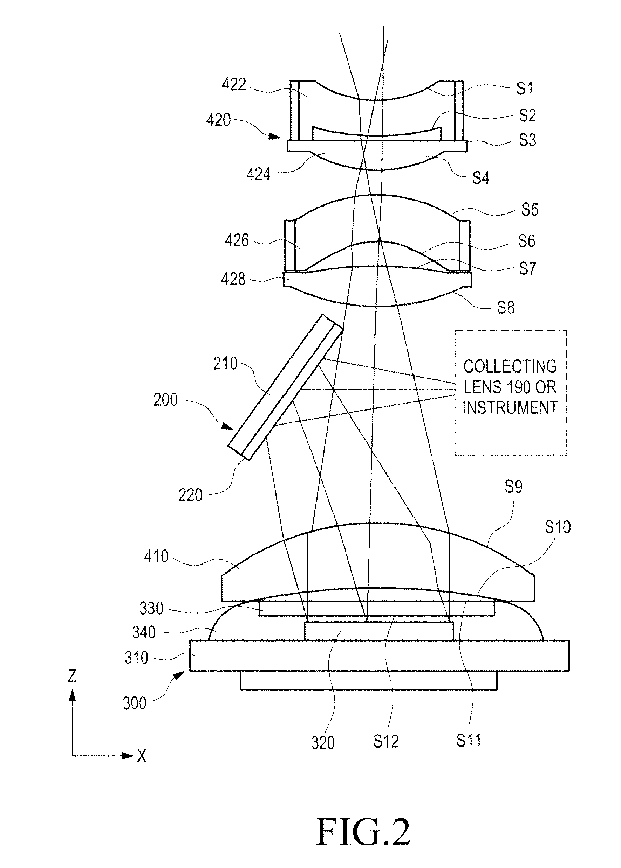

Referring to FIGs. 1 and 2, the display unit 300 displays an image by the pixel, in which the display unit 300 is provided with pixel elements 320 corresponding to a preset resolution, and displays an image through ON/OFF driving of the pixel elements 320. A virtual plane including all the surfaces of the pixel elements 320 (i.e., the reflecting surfaces) is referred to as a reflecting surface of the display unit 300. Although the surface of the mirror 200 is also a reflecting surface, the reflecting surface to be referred below is used to refer to the reflecting surface of the display unit 300. A DMD including micro-mirrors arranged in an M x N matrix arrangement (for example, 1280 x 720, 854 x 480, etc.) is used as the display unit 300. Each of the micro-mirrors is rotated to a position corresponding to an ON-condition or an OFF-condition depending on a driving signal, in which when in the ON-condition, each micro-mirror reflects light that is incident to the mirror at an angle to be capable of being displayed on the screen, and when in the OFF-condition, the micro-mirror reflects light that is incident to the mirror at an angle not to be displayed on the screen. The display unit 300 includes a circuit board 310 configured to a driving signal to the pixel elements 320, a cover glass 330 configured to protect the pixel elements 320 from the external environment, and a sealing layer 340 configured to protect the exposed top side of the circuit 310 from the external environment.

The projection optical system 400 has the second optical axis 405, and includes the relay lens 410 and a projection lens 420. The second relay lens 410 and the projection lens 420 are arranged on the second optical axis 405.

The relay lens 410 receives light reflected from the display unit 300, and reduces the beam spot size of the light to output the light. Since the projection light reflected from the display unit has a large beam spot size, light loss may be tremendous due to the light that is not transferred to the projection lens 420. The relay lens 410 collects or condenses the light reflected from the display 300 and reduces the beam spot size, such that the light can be transferred to the projection lens 420 as much as possible.

The projection lens 420 receives the light, of which the beam spot size is tuned, from the relay lens 410, and focuses the projection light to form on the screen. That is, the projection lens 420 is moved automatically or manually to adjust the focal distance thereof, and magnifies an image to be displayed on the display unit 300 so that a magnified image is displayed.

In order to reduce the volume of the projector 10, it is required to closely position all the optical devices in the projector 10. By reducing the distance from the collecting lens 190 to the mirror 200, it is possible to reduce the X-axis length of the projector 10, and by reducing the distance from the relay lens 410 to the projection lens 420, it is possible to reduce the Z-axis length of the projector 10. The Effective Focal Length (EFL) of the illumination optical system 100 is determined by the collecting lens 190 and the relay lens 410, and the mirror 200 is positioned between the relay lens 410 and the projection lens 420 so that the X-axis and Y-axis lengths of the projector 10 can be minimized, and at the same time, the mirror 200 will not block the light traveling from the relay lens 410 to the projection lens 420.

FIG. 2 illustrates the detailed construction of the projection optical system. Hereinafter, although the description for the shapes of the optical surfaces are made with reference to Table 1 below, the optical surface of each of the lenses that form the projector 10 may be either spherical or aspheric.

The projection lens 420 that forms the projection optical system 400 includes first to fourth lenses 422, 424, 426 and 428 arranged from the screen side to the reflection surface side in this order. Hereinafter, the ordinal numbers will be respectively assigned to the optical surfaces in the order arrangement from the screen side to the reflection surface side.

The first lens 422 has first and second optical surfaces S1 and S2, both of which are convex toward the reflection surface side, in which each of the first and second optical surfaces S1 and S2 is an aspheric surface.

The second lens 424 has third and fourth optical surfaces S3 and S4 which are convex to the opposite sides, respectively, in which each of the third and fourth optical surfaces S3 and S4 is an aspheric surface. It is possible to use a bonded doublet by combining the first and second lenses 422 and 424.

The third lens 426 has fifth and sixth optical surfaces S5 and S6, both of which are convex to the screen side, in which each of the fifth and sixth optical surfaces S5 and S6 is an aspheric surface.

The fourth lens 428 has seventh and eighth optical surfaces S7 and S8 which are convex to the opposite sides, respectively, in which each of the seventh and eighth optical surfaces S7 and S8 is spherical. It is possible to use a bonded doublet by combining the third and fourth lenses 426 and 428. Alternatively, at least one optical surface of the fourth lens 428 may be an aspheric surface.

The relay lens 410 that forms the projection optical system 400 is formed by a single lens, and has ninth and tenth optical surfaces S9 and S10, in which each of the ninth and tenth optical surfaces S9 and S10 is a spherical surface. Alternatively, at least one optical surface of the relay lens 410 may be an aspheric surface.

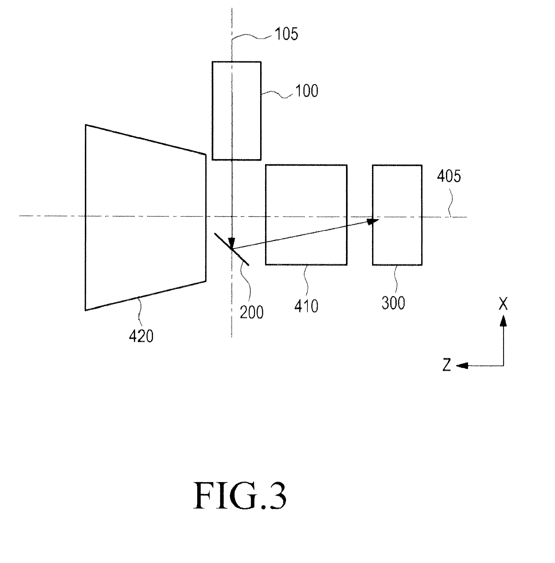

FIG. 3 is a block diagram illustrating the basic construction illustrated in FIG. 1.

FIG. 3 illustrates the illumination optical system 100, the relay lens 410 and the projection lens 420 that form the projection optical system 400, the mirror 200, and the display unit 300 on a virtual plane including the first optical axis 105 and the second optical axis 405 in the simplest form. In the basic construction, the central axis of the display unit 300 (not shown because it overlaps with the second optical axis 405) and the second optical axis 405 of the projection optical system 400 coincide with each other. The pixel elements 320 of the display unit 300 are arranged in an M x N matrix arrangement (for example, 1280 x 720, 854 x 480, etc.), in which the central axis is a normal line of the reflecting surface of the display unit 300 as well as an axis extending through the center of the pixel elements 320 (an axis of symmetry common in each of the column and row directions). In addition, the display unit 300 is arranged such that the row direction of the pixel elements 320 is positioned on the virtual plane. The row direction of the pixel elements is parallel to the first optical axis 105 and the X-axis and the column direction of the pixel elements 320 is parallel to the Y-axis. However, the first optical axis 105 is not necessarily required to be positioned at right angles to the second optical 405.

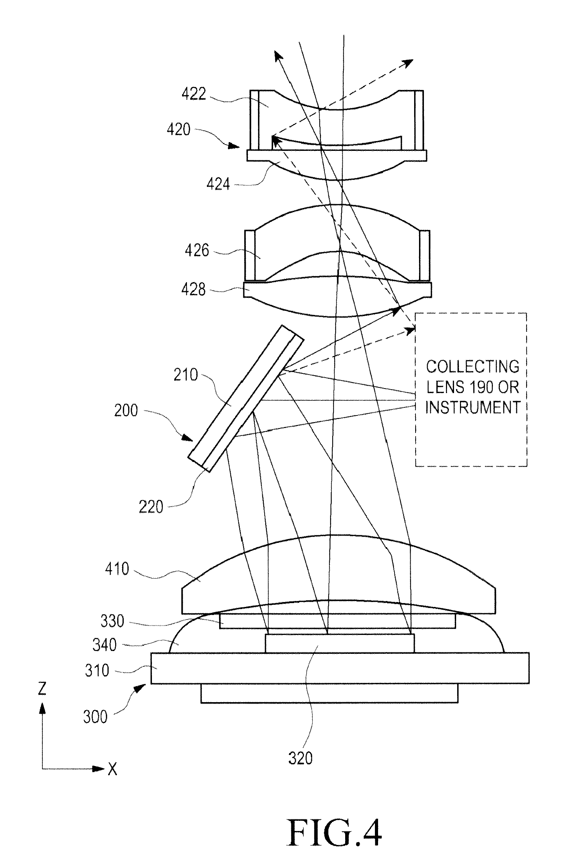

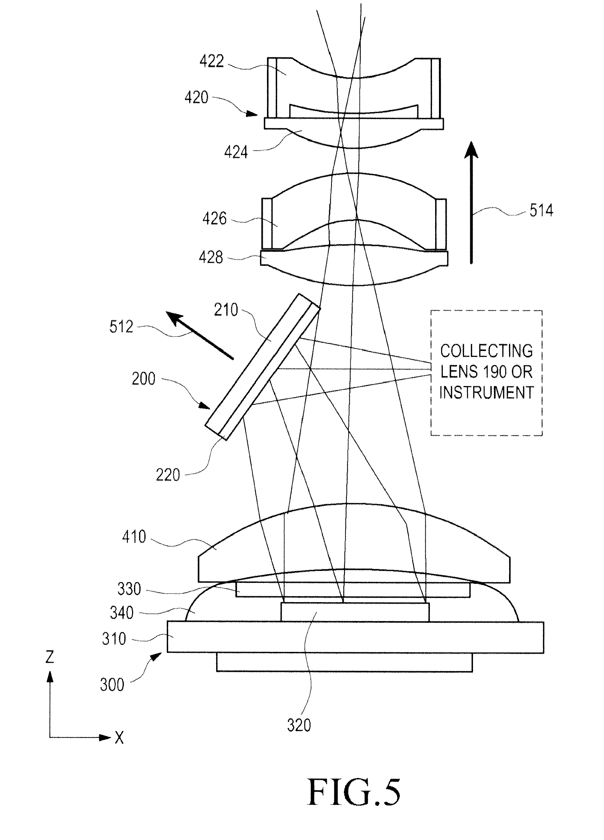

FIGs. 4 and 5 are diagrams illustrating a problem of blocking projection light by a mirror, and a method for solving the problem according to an embodiment of the present invention.

FIG. 4 is a diagram illustrating a problem of blocking projection light by the mirror 200.

The blocking problem is caused when the distance from the collecting lens 190 to the mirror 200 is reduced so as to reduce the X-axis length of the projector 10. In such a case, the light traveling from the relay lens 410 to the projection lens 420 may be blocked by the mirror 200.

If the position of the mirror 200 is not shifted, it is impossible to obtain a uniform image on the screen since a part of light reflected from the display unit 300 is blocked by the mirror 200. The light reflected by the mirror 200 may be incident to the projection lens 420, or may be reflected by an instrument in the inside of the projector 10 and then incident to the projection lens 420. The light reflected by the mirror 200 and then incident to the screen may cause a stray light phenomenon in the outside of the image or a side effect that the contrast ratio of the image is reduced. In order to prevent the light reflected by the mirror 200 from being incident to the screen through the projection lens 420, a peripheral part of the projection lens 420 may be cut, in which case the quantity of light of normal light traveling through the projection lens 420 may be reduced, which may darken an image displayed on the screen.

FIG. 5 is a diagram illustrating a method of solving the light blocking problem by the mirror according to an embodiment of the present invention.

One method for solving the above-mentioned blocking problem is to shift the mirror 200 backward in the direction as indicated by arrow S12 (i.e., away from the projection optical system 400) while maintaining the angle between a normal line of the mirror 200 and the first optical axis 105. However, the distance between the relay lens 410 and the projection lens 420 will be increased. In addition, since it is necessary to shift the projection lens 420 in the direction as indicated by arrow 514 as the light incident to the mirror 200 from the collecting lens 190 is shifted toward the projection lens 420, the distance between the relay lens 410 and the projection lens 420 will be further increased. That is, this solution requires the backward shifting of the mirror 200 and the upward shifting of the projection lens 420, which in turn increases the volume of the projector 10.

According to an aspect of the present invention, there is provided a preset offset between the second optical axis 405 of the projection optical system 400 and the central axis of the display unit 300 in the construction described above.

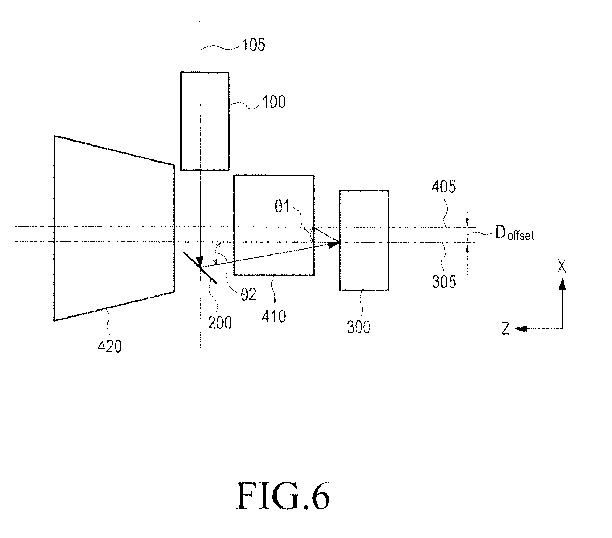

FIG. 6 is a block diagram illustrating a construction of a micro-projector according to an embodiment of the present invention.

FIG. 6 illustrates the illumination optical system 100, the projection optical system 400, the mirror 200 and the display unit 300 in the simplest form on a virtual plane including the first optical axis 105 and the second axis 405. In the improved construction, the central axis 305 of the display unit 300 and the second optical axis 405 of the projection optical system 400 do not coincide with each other, and a preset offset $D_{offset}$ is provided therebetween. The row direction of the pixel elements 320 is parallel to the first optical axis 105 and the X-axis, and the column direction of the pixel elements 320 is parallel to the Y-axis. However, the first optical axis 105 is not necessarily required to be positioned at right angles relative to the second optical axis 405.

For example, the offset $D_{offset}$ may be expressed by a percentage relative to a half of the total or whole length of the pixel elements 320 in the row direction with reference to the half length. For example, in the case where the central axis 305 of the display unit 300 and the second optical axis 405 of the projection optical system 400 coincide with each other, the offset $D_{offset}$ will be 0%, and in the case where the second optical axis 405 of the projection optical system 400 is positioned at an end of the row direction of the display unit 300, the offset $D_{offset}$ will be 100%. Preferably, the offset $D_{offset}$ is provided in the range of 3% to 20%.

Although the the row direction of the pixel elements 320 (i.e., the longer direction) is arranged to be positioned on the virtual plane including the first optical axis 105 and the second optical axis 405, as described herein, the display unit 300 may also be arranged such that the column direction of the pixel elements 320 (i.e., the shorter direction) is arranged to be positioned on the virtual plane including the first optical axis 105 and the second optical axis 405. In such a case, the offset $D_{offset}$ be expressed by a percentage relative to a half of the total or whole length of the pixel elements 320 in the column direction with reference to the half length, and preferably provided in the range of 3% to 20%.

The light traveling along the first optical axis 105 is reflected by the mirror 200 and then travels through the relay lens 410 to be incident to the center of the display unit 300. The incidence angle of the reflected light, i.e. the angle $\theta2$ formed by the central axis 305 of the display unit 300 and the reflected light is preferably in the range of 22 degrees to 30 degrees. In addition, the reflection angle of the light just after being reflected from the display unit 300, i.e, the angle $\theta1$ formed by the central axis 305 of the display unit 300 and the angle of the light just after being reflected is preferably in the range of 2 degrees to 8 degrees.

With the provision of such an offset, the light traveling from the relay lens 410 to the projection lens 420 is not blocked, thereby preventing loss of light. Consequently, it is possible to obtain a uniform image which does not suffer from vignetting and loss of quantity of surrounding light, in which the vignetting is a phenomenon that a corner or a perimeter part of an image is darkened or obscured due to the drop of quantity of light at a peripheral part on a screen. In addition, secondary light through an abnormal path will not be produced which may produce stray light or cause deterioration of contrast ratio.

The above-mentioned offset accompanies a change of design of the projection optical system 400.

Table 1 below shows numerical data of the optical devices that form the projection optical system 400. In Table 1 below, the radius of curvature of the $i^{th}$ optical surface Si, D, indicates the thickness or air space of the $i^{th}$ optical surface Si (or the distance from the $i_{th}$ optical surface to the $(i+1)^{th}$ optical surface), N indicates the refractive index at the d line (587.5618 nm) of the $i^{th}$ optical surface, and V indicates the Abbe number of the $i_{th}$ optical surface. In addition, the radius of curvature and thickness is in units of mm. The optical surface numbers, i, are those sequentially assigned from the screen side to the reflection surface side of the display unit 300. Table 1 below shows a case in which a 0% X-axis offset is provided and a case in which a 10% X-axis is provided.

Table 1

| Surfaces | Reference design of O% X-axis offset optical system | | | | | Reference design of 10% X-axis offset optical system | | | | |
|---|---|---|---|---|---|---|---|---|---|---|
| | Radius at curvature (mm) | between surfaces | I (mm) | N | V | Radius of curvature (mm) | between surfaces | (mm) | | |
| | -2.50 | 1-2 | 1.30 | 1.5311 | 55.80 | -3.02 | 1-2 | .20 | .5311 | 5.80 |
| | -4.65 | 2-3 | 0.10 | 1.0000 | | -8.86 | 2-3 | .10 | .0000 | |
| | 13.00 | 3-4 | 1.78 | 1.5311 | 55.80 | 17.90 | 3-4 | .70 | .5311 | 5.80 |
| | -4.84 | 4-5 | 1.99 | 1.0000 | | -3.77 | 4-5 | .87 | .0000 | |
| | 7.56 | 5-6 | 0.97 | 6.3200 | 23.00 | 5.04 | 5-6 | .60 | .3200 | 3.00 |
| | 3.07 | 6-7 | 1.88 | 1.0000 | | 2.41 | 6-7 | .55 | .0000 | |

(continued)

| Surfaces | Reference design of O% X-axis offset optical system | | | | | Reference design of 10% X-axis offset optical system | | | | |
|---|---|---|---|---|---|---|---|---|---|---|
| | Radius at curvature (mm) | between surfaces | I (mm) | N | V | Radius of curvature (mm) | between surfaces | (mm) | | |
| | | 7-8 | 2.50 | 1.6204 | 60.34 | 22.50 | 7-8 | .00 | .4969 | 1.60 |
| | -8.12 | 8-9 | 8.04 | 1.0000 | | -9.38 | 8-9 | .45 | .0000 | |
| | 10.80 | 9-10 | 3.00 | 1.6584 | 5 0.85 | 10.80 | 9-10 | .00 | .6584 | 0.85 |
| | 4 | 1 | 0 | 1 | | 4 | 1 | | | |
| 0 | 0.80 | 0-11 | .60 | .0000 | | 0.80 | 0-11 | .60 | .0000 | |
| 1 | | 11-12 | 0.65 | 1.5069 | 63.10 | | 11-12 | .65 | .5069 | 3.10 |
| 2 | | 12-Display unit | 0.71 | 1.0000 | | | 12-Display unit | .30 | .0000 | |

In Table 1, each of the first to sixth optical surfaces S1 to S6 is an asymmetric surface. If a corresponding optical surface is a plane, no radius of curvature is indicated, and the refractive index of air is 1.
An asymmetric surface is determined by Equation (1) as follows.

Equation (1)

$$z = \frac{ch^2}{1 + SQRT\{1 - (1 + k)c^2h^2\}} + Ah^4 + Bh^6 + Ch^8 + Dh^{10} + Eh^{12} + Fh^{14} + Gh^{16}$$

In Equation 1, z indicates a distance along the second optical axis from the peak of an optical surface, h indicates a distance in a direction perpendicular to the second optical axis, c is a curvature at the peak of the optical surface (the inverted number of a radius of curvature), k indicates a conic coefficient, and A, B, C, D, E, F and G indicate asymmetric parameters.
The asymmetric parameters of individual asymmetric surfaces of Table 1 are shown in Table 2 and Table 3 below.
Table 2 below shows the case in which the 0% X-axis offset is provided, and Table 3 shows the case in which the 10% X-axis offset is provided.

Table 2

| Reference design of 0% x-axis offset optical system | | | | | | | |
|---|---|---|---|---|---|---|---|
| Aspheric parameters | | | | | | | |
| Surfaces | K | A | B | C | D | E | F |
| 1 | -0.5868604 | 0.0 2061595 | -0.001949 | 0.0 0021047 | -1.59E-05 | 7.4 9E-07 | -1.28E-08 |
| 2 | -1.16E+00 | 1.0 6E-02 | -0.000804 | 4.4 1E-05 | -3.03E-06 | 8.9 5E-08 | 2.9 2E-10 |
| 3 | -1.72E+00 | -3.78E-03 | 0.0 002273 | -5.05E-06 | -2.94E-06 | 3.2 8E-07 | -1.69E-08 |
| 4 | -5.72E-01 | 6.5 2E-05 | 0.0 001916 | -2.90E-05 | 1.8 4E-06 | -2.62E-08 | -4.35E-09 |
| 5 | -2.58E-01 | -1.65E-03 | 0.0 001027 | -9.10E-06 | 7.0 9E-07 | -2.79E-08 | 4.0 8E-10 |
| 6 | 8.46E-01 | -7.19E-03 | 0.0 004096 | -2.58E-05 | 1.3 5E-06 | -4.42E-08 | 6.0 9E-10 |

Table 3

| Reference design of 10% x-axis offset optical system | | | | | | | |
|---|---|---|---|---|---|---|---|
| Aspheric parameters | | | | | | | |
| S urfaces | K | A | B | C | D | E | F | G |
| 1 | -0.481167 8 | 0. 0133107 | -0.001510 7 | 0. 0002047 | -2.01E-05 | 1. 32E-06 | -4.72E-08 | 6. 90E-10 |
| 2 | 3. 4232021 | 0. 0095121 | -0.001389 4 | 0. 0001397 | -7.76E-06 | -5.80E-08 | 3. 15E-08 | -1.11E-09 |
| 3 | 8. 8860626 | 0. 0004477 | -0.000267 9 | 1. 18E-05 | 2. 83E-06 | -5.28E-07 | 3. 41 E-08 | -8.10E-10 |
| 4 | -0.035350 8 | 0. 0082739 | -0.000461 6 | 4. 47E-05 | -1.05E-06 | 3. 71E-09 | -3.97E-09 | 3. 92E-10 |
| 5 | -0.622084 7 | -0.000993 9 | -0.000311 | 4. 28E-05 | -2.70E-06 | 7. 40E-08 | 1. 32E-10 | -3.43E-11 |
| 6 | -2.627975 | 0. 0013888 | -0.000311 4 | 3. 39E-05 | -1.38E-06 | -5.16E-08 | 6. 77E-09 | -1.76E-10 |

The present invention provides a micro-projector of which the display unit and projection optical system are positioned on different optical axes. which has an advantage, as compared to a micro-projector of which the display unit and projection optical system are on the same axis, in that it is possible to maintain the uniformity of brightness without producing stray light or causing deterioration of contrast ratio.

While the present invention has been shown and described with reference to various embodiments thereof, it will be understood by those skilled in the art that changes in form and detail may be made without departing from the scope of the invention as defined by the appended claims.

**Claims**

1.    A projector for projecting out a light forming an image on an external screen, comprising:

at least one light source configured to output a light;
a display unit, comprising a plurality of pixel elements, configured to form an image by controlling the pixel elements according to a driving signal;
an illumination optical system comprising at least one lens and mirror arranged on a first optical axis, and configured to output the light output from the light source to the display unit through the mirror; and
a projection optical system comprising at least one lens arranged on a second optical axis intersecting the first optical axis, and configured to externally output the light output from the display unit,
wherein a preset offset is provided between the second optical axis of the projection optical system and a central axis of the display unit.

2.    The projector as claimed in claim 1, wherein the pixel elements are arranged in a matrix arrangement, and the offset is in the range of 3% to 20% relative to a half of a total length of the pixel elements in a row or column direction.

3.    The projector as claimed in claim 1 or 2, further comprising:

a projection lens configured to adjust a focus of the light projected externally; and
a relay lens arranged between the projection lens and the display unit, and configured to reduce a beam spot size of the light reflected from the display unit and to output the light to the projection lens.

4.    The projector as claimed in one of claims 1 to 3, wherein the illumination optical system comprises a fly eye lens configured to equalize an intensity distribution of light received from the light source.

5.    The projector as claimed in one of claims 1 to 4, wherein a light traveling along the first optical axis is reflected by the mirror and incident to the display unit at an angle in the range of 22 degrees to 30 degrees.

6.    The projector as claimed in claim 3, wherein the mirror is at least partially positioned between the projection lens and the relay lens.

**7.** The projector as claimed in one of claims 1 to 6, wherein the at least one light source comprises a first and a second light source configured to output visible lights of different colors.

**8.** The projector as claimed in claim 7, wherein the illumination optical system further comprises a filter configured to transmit a first primary color light input from the first light source, and to reflect a second primary color light input from the second light source, wherein the first and second primary color lights travel along the first optical axis.

**9.** The projector as claimed in claim 8, wherein the illumination optical system further comprises a collecting lens configured to collect a light input from the filter.

FIG.1

FIG.2

EP 2 560 378 A2

FIG.3

12

FIG.4

FIG.5

# FIG.6